# EUROPEAN PATENT SPECIFICATION

(11) **EP 0 976 323 B1**
(45) Date of publication and mention of the grant of the patent: **09.10.2002**
(21) Application number: 99110911.7
(22) Date of filing: 04.06.1999
(51) Int. Cl.: A01M 1/04, A01M 1/14

(54) **Insect-killing device**
Insektentöttendes Gerät
Dispositif d'extermination des insectes

(30) Priority: 10.06.1998 IT VE980025
(43) Date of publication of application: 02.02.2000
(73) Proprietor: MULTITECNO S.r.l., 30025 Fossalta Di Portogruaro (Prov. of Venezia) (IT)
(72) Inventor: Reatti, Guido, 35128 Padova (IT)
(74) Representative: Modiano, Guido, Dr.-Ing.

(56) References cited:
- WO-A-92/20224
- WO-A-95/11589
- US-A- 5 651 211

## Description

The present invention relates to an insect-killing device.

The food industry and the industry related to the manufacture of items intended for food use (containers and packages in general for food) extensively combat against flies and flying insects in general. During the periods of maximum fertility of flies and flying insects in general there can be population explosions to the point of uncontrollable infestation. Without the intervention of abiotic or biotic factors capable of limiting the natural proliferation of these insects, one pair of flies could generate, in a little over five months, as many as 65x10¹³ flies, evidently entailing the need to resort to perfectly efficient insect-killing devices.

US-5,651,211 discloses an insect-killing device substantially constituted by an ultraviolet light source which is associated with a strip treated with an adhesive imbibed with food- and sexual pheromone-based attractants. The strip is contained in a cartridge which is provided with a mechanical system adapted to unwind it continuously from a roller and wind it onto another roller, so that it has a portion exposed to the environment which is renewed continuously and is capable of capturing, through the adhesive effect, any insects that might land on it.

The ultraviolet light source is meant to attract insects into the range of effectiveness of the strip in order to allow the attractants that are present in it to perform the final attraction and adhesion action.

The environment to be sanitized is generally constituted by an industrial building equipped with a plurality of insect-killing devices arranged at such mutual distances as to cover, all together, the entire enclosed space. These devices have interchangeable cartridges which ensure an average duration of a certain number of days; once the strip is used up it must be replaced with another one.

Although from a theoretical point of view such replacement does not entail particular difficulties, from a practical point of view it has some drawbacks which the present invention seeks to eliminate.

A drawback is the fact that since the strip advancement system is generally constituted by an electric motor which is connected to the roller for taking up said strip, the larger or smaller number of captured insects and their dimensions significantly affect the diameter of the takeup roller at each instant and therefore, for an equal rotation rate, the advancement speed of the strip and essentially its duration.

Accordingly, a plurality of devices loaded with strip cartridges of equal length rarely have the same duration.

In order to avoid problems in terms of inefficiency of used-up devices or of expensive replacement of not fully used-up devices, it is advisable to perform frequent inspections of the different devices; this operation is not only awkward in any case but in some situations it is extremely difficult owing to the usually scarcely accessible position in which the different devices are installed.

The aim of the invention is to provide an insect-killing device which does not have these drawbacks, i.e., a device in which it is possible to promptly know the conditions of depletion of the cartridge without having to resort to periodic inspections and therefore without having to deal with the inconveniences that these inspections entail.

This aim, these objects and others which will become apparent hereinafter are achieved, according to the invention, by an insect-killing device comprising a cartridge with a strip treated with an adhesive imbibed with insect attractants, at least one light source capable of emitting light which attracts insects into the range of effectiveness of said strip, a power supply circuit for said light source and mechanical means for producing a slow and continuous unwinding of said strip from a dispensing roller to a takeup roller, so that it has a continuously renewed portion exposed to the outside environment, characterized in that the power supply circuit of said light source includes a switch which is kept in an activated condition by said strip, means for deactivating said switch being associated with said strip at its end portion.

Further characteristics and advantages of the present invention will become more apparent from a detailed description hereinafter of an embodiment thereof, provided merely by way of nonlimitative example with reference to the accompanying drawings, wherein:

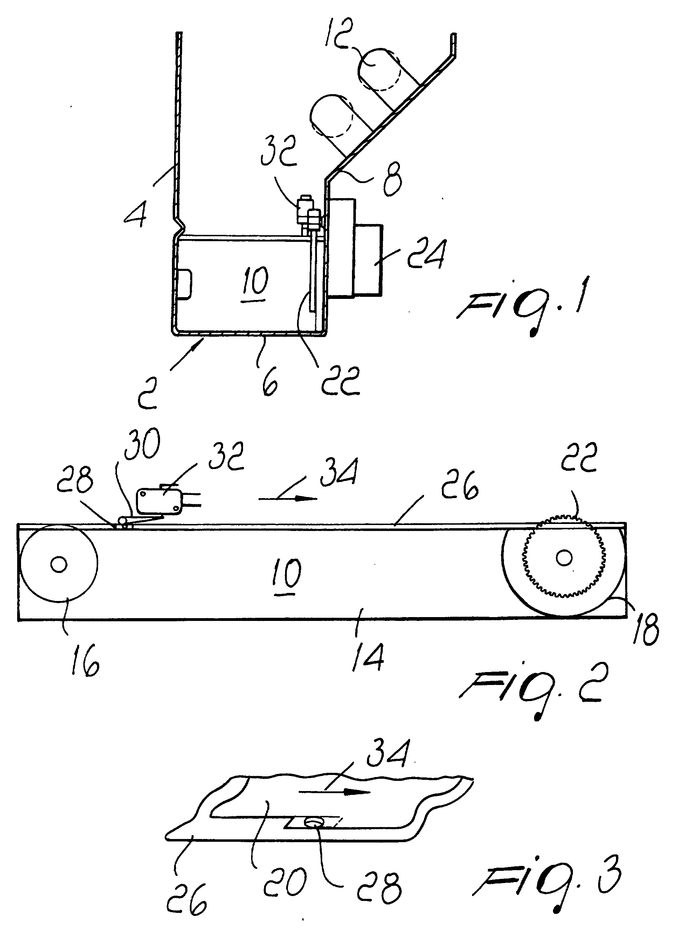

Figure 1 is a schematic transverse sectional view of an insect-killing device according to the invention;
Figure 2 is a partial longitudinal sectional view thereof; and
Figure 3 is a schematic perspective view of a portion of cartridge in which the strip has reached the end of its takeup.

As shown in the figures, the device according to the invention essentially comprises a box-like container, preferably made of metal plate or plastics and generally designated by the reference numeral 2. It has a vertical rear wall 4 for application to the wall of the enclosed space to be sanitized, a bottom 6 and a front wall 8, which is parallel to the wall 4 in a downward region and forms, together with the wall and the bottom, a parallelepipedal receptacle for a cartridge 10; in an upward region, the front wall flares outward and has connectors for conventional ultraviolet light sources, generally designated by the reference numeral 12.

The cartridge 10 is constituted by a box 14 which is essentially shaped like a parallelepiped and has dimensions adapted to contain it snugly in the lower part of the box-like container 2. The two longitudinal vertical walls of the box 14 support two rollers 16 and 18; one roller, designated by the reference numeral 16, dispenses an insecticidal strip 20, while the other roller 18 takes up the strip as it is unwound from the roller 16, as will become apparent hereinafter.

The strip 20 is constituted in a conventional manner by a continuous paper backing to which an adhesive substance is applied which is imbibed with food- and pheromone-based sexual attractants for insects. It is initially wound on the roller 16 and is slowly unwound from it by the roller 18, which is provided for this purpose with a gear 22 coupled to an electric motor 24 which is applied externally to the wall 8 of the box-like container 2.

The upper horizontal wall 26 of the cartridge 10 is affected, proximate to the takeup roller 16, by an opening 28 at which there is the actuation arm 30 of a microswitch 32 which is applied to the wall 8 of the box-like container 2.

The position of the opening 28 is such that the strip 20, by way of its width, usually keeps it covered, whilst at its end portions, by way of its reduced width, it exposes said opening and allows it to be engaged by the actuation arm 30 of the microswitch 32.

The microswitch 32 is in turn inserted in series in the power supply circuit of the UV light sources 12.

The operation of the insect-killing device according to the invention is as follows: in the normal operating condition, the opening 28 provided in the upper wall 26 of the cartridge 10 is kept covered by the strip 20, the arm 30 of the microswitch 32 rests on the strip and keeps the microswitch activated, and the microswitch in turn keeps the light sources 12 powered. In this condition, the device is active, in that the light sources 12 are on and attract the insects; at the same time, the motor 24 causes a slow advancement of the strip 20, so that it exposes to the environment a portion which is slowly and continuously renewed and thanks to its adhesive power entraps the insects attracted from a distance by the light sources 12 and from the vicinity by the pheromone-based substances with which the adhesive applied to said strip is imbibed. The insects thus entrapped by the adhesive are caught between successive turns of the strip, which is slowly wound onto the takeup roller 18.

When the strip 20, which advances in the direction of the arrow 34 in Figures 2 and 3, is about to end, and when in particular its narrower end portion arrives at the opening 28, it exposes the opening and allows the end of the arm 30 of the microswitch 32 to engage it, deactivating the microswitch and thus interrupting the supply of power to the UV light sources 12.

In this manner, the light sources switch off and indicate externally that the strip 20 is about to end; however, since the microswitch 32 does not act on the power supply circuit of the motor 24, said motor continues to produce the slow advancement of the strip 20 so as to keep the device at least partially efficient for a reasonable period of time so as to allow the person meant to monitor the device to intervene in order to replace the cartridge 10.

The microswitch 32 can also provide an acoustic indication and/or a signal to a remote post, in order to allow an operator assigned to monitoring the entire system to intervene even without having to actually inspect the device visually.

Substantially, the insect-killing device according to the invention differs deeply from conventional devices because it uses in particular the light sources, i.e., elements meant to perform a given function (attraction) with respect to the insects to be captured, to also perform an entirely different function, particularly the function of indicating that the insecticidal strip is about to end. Accordingly, the device according to the invention eliminates the need to resort to periodic inspections of the condition of the device, with the double advantage of avoiding unnecessary inspections on the one hand and of preventing said device from being inefficient due to strip depletion on the other hand.

The present invention has been illustrated and described in a preferred embodiment thereof, but it is understood that constructive variations may be applied to it in practice without thereby abandoning the protective scope of the present invention.

The disclosures in Italian Patent Application No. VE98A000025 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An insect-killing device which comprises a cartridge (10) with a strip (20) treated with an adhesive imbibed with insect attractants, at least one light source (12) capable of emitting light which attracts insects into the range of effectiveness of said strip, a power supply circuit for said light source and mechanical means (16, 18, 24) for producing a slow and continuous unwinding of said strip from a dispensing roller (16) to a takeup roller (18), so that it has a continuously renewed portion exposed to the outside environment, **characterized in that** the power supply circuit of said light source (12) includes a switch (32) which is kept in an activated condition by said strip (10), means (28, 30) for deactivating said switch being associated with said strip at its end portion.

2. The device according to claim 1, **characterized in that** the wall (26) of the cartridge (10) on which the strip (20) slides is affected by an opening (28) which can be engaged by an element (30) for deactivating said switch (32) and can be covered by said strip (10) except for its end position, which leaves said opening exposed.

3. The device according to claim 2, **characterized in that** the switch (32) is provided with an actuation arm (30) which can move between an activation position, at which it rests on said strip (10), to a deactivation position, at which it engages said opening (28) left exposed by the final position of said strip.

4. The device according to claim 1, **characterized in that** an element for acoustically indicating its deactivated condition is associated with the switch (32).

5. The device according to claim 1 and/or 4, **characterized in that** an element for remotely signaling its deactivated condition is associated with the switch (32).

## Patentansprüche

1. Insekten-Tötungsvorrichtung folgendes aufweisend:
- eine Kassette (10) mit einem Streifen (20), welcher mit Klebstoff, der Insektenlockmittel aufgenommen hat, behandelt wurde;
- wenigstens eine Lichtquelle (20), die zum Aussenden von Licht geeignet ist, welches Insekten in den Bereich der Wirksamkeit des Streifens anlockt;
- eine Stromversorgungsschaltung für die Lichtquelle; und
- mechanische Einrichtungen (16, 18, 24) zum Erzeugen eines langsamen und kontinuierlichen Abspulens des Streifens von einer Ausgabewalze (16) zu einer Aufwickelwalze (18), so dass der Streifen einen kontinuierlich aufgefrischten Bereich aufweist, der der Außenumgebung ausgesetzt ist,
**dadurch gekennzeichnet, dass**
die Stromversorgungsschaltung der Lichtquelle (12) einen Schalter (32) aufweist, welcher durch den Streifen (10) in einer aktivierten Stellung gehalten wird, und Vorrichtungen (28, 30) zur Deaktivierung des Schalters aufweist, die in Zusammenhang mit dem Steifen an seinem Endabschnitt stehen.

2. Vorrichtung gemäß Anspruch 1,
**dadurch gekennzeichnet, dass**
die Wand (26) der Kassette (10), an welche der Streifen (20) gleitet, mit einer Öffnung (28) versehen ist, welche durch ein Element (30) zur Deaktivierung des Schalters (32) belegt sein kann, und welche durch den Streifen (10) bedeckt sein kann, mit Ausnahme für seine Endposition, welche die Öffnung frei lässt.

3. Vorrichtung gemäß Anspruch 2,
**dadurch gekennzeichnet, dass**
der Schalter (32) mit einem Betätigungsarm (30) versehen ist, welcher sich zwischen einer Aktivierungsposition, bei welcher er an dem Steifen (10) aufliegt, und einer Deaktivierungsposition bewegen kann, bei welcher er die Öffnung (28) belegt, die durch die endgültige Position des Streifens frei gelassen wird.

4. Vorrichtung gemäß Anspruch 1,
**dadurch gekennzeichnet, dass**
dem Schalter (32) ein Element zur akustischen Signalisierung seiner deaktivierten Stellung zugehörig ist.

5. Vorrichtung nach Anspruch 1 und/oder 4,
**dadurch gekennzeichnet, dass**
dem Schalter (32) ein Element zur Fernsignalisierung seiner deaktivierten Stellung zugehörig ist.

## Revendications

1. Dispositif pour l'extermination des insectes qui comprend une cartouche (10) avec une bande (20) traitée avec un adhésif imbibé d'attractifs pour insectes, au moins une source de lumière (12) susceptible d'émettre une lumière qui attire les insectes dans la plage d'efficacité de ladite bande, un circuit d'alimentation électrique pour ladite source de lumière et des moyens mécaniques (16, 18, 24) pour produire un déroulement lent et continu de ladite bande depuis un rouleau distributeur (16) vers un enrouleur (18), de telle sorte qu'elle ait une partie renouvelée en continu exposée à l'environnement extérieur, **caractérisé en ce que** le circuit d'alimentation électrique de ladite source de lumière (12) comprend un interrupteur (32) qui est maintenu dans un état activé par ladite bande (10), des moyens (28, 30) pour désactiver ledit interrupteur associé à ladite bande au niveau de sa partie d'extrémité.

2. Dispositif selon la revendication 1, **caractérisé en ce que** la paroi (26) de la cartouche (10) sur laquelle coulisse la bande (20) est affectée d'une ouverture (28) qui peut être mise en prise par un élément (30) afin de désactiver ledit interrupteur (32) et peut être recouverte par ladite bande (10), sauf dans sa position d'extrémité, qui laisse ladite ouverture découverte.

3. Dispositif selon la revendication 2, **caractérisé en ce que** l'interrupteur (32) est muni d'un bras actionneur (30) qui peut se déplacer entre une position d'activation, dans laquelle il repose sur ladite bande (10), et une position de désactivation, dans laquelle il vient en prise avec ladite ouverture (28) laissée découverte par la position finale de ladite bande.

4. Dispositif selon la revendication 1, **caractérisé en ce qu'**un élément destiné à indiquer de manière acoustique son état désactivé est associé à l'interrupteur (32).

5. Dispositif selon la revendication 1 et/ou 4, **caractérisé en ce qu'**un élément pour signaler à distance son état désactivé est associé à l'interrupteur (32).
